# EUROPÄISCHE PATENTSCHRIFT

(11) **EP 0 634 371 B1**
(45) Veröffentlichungstag und Bekanntmachung des Hinweises auf die Patenterteilung: **21.04.1999**
(21) Anmeldenummer: 93111349.2
(22) Anmeldetag: 15.07.1993
(51) Int. Cl.: C03B 23/025, C03B 23/033, C03B 27/044

(54) **Verfahren und Vorrichtung zum dreidimensionalen Verformen von Platten, insbesondere Glasscheiben**
Method and apparatus for three-dimensional forming of plates, in particularly glass-plates
Procédé et appareil pour le bombage dans le sens tri-dimensional de feuilles, en particulier des feuilles de verre

(43) Veröffentlichungstag der Anmeldung: 18.01.1995
(73) Patentinhaber: CRISTALES AUTOMATRICES DE JALISCO, S.A., C.P. 44940 Guadalajara (MX)
(72) Erfinder: Tovar, Miguel, Guadalajara, Jal. (MX)
(74) Vertreter: Stenger, Watzke & Ring Patentanwälte

(56) Entgegenhaltungen:
- EP-A- 0 114 168
- EP-A- 0 143 691
- EP-A- 0 148 043
- FR-A- 1 476 785
- FR-A- 2 129 919
- FR-A- 2 221 409
- US-A- 3 545 951
- US-A- 4 139 359
- US-A- 4 218 232
- US-A- 4 381 933

## Beschreibung

Die Erfindung betrifft ein verfahren zum dreidimensionalen Verformen von Glasscheiben, welche im ersten Schritt auf die Erwärmungstemperatur erwärmt, im zweiten Schritt verformt und im dritten Schritt durch gezielte Kühlung vorgespannt werden. Darüber hinaus betrifft die Erfindung eine Vorrichtung zum dreidimensionalen Verformen von Platten nach dem erfindungsgemäßen Verfahren.

An dreidimensional verformten Platten besteht allgemein ein sehr großer Bedarf. So werden dreidimensional verformte Glasscheiben beispielsweise in der Automobilindustrie oder auch in der Architektur als Bauglas in großem Umfange benötigt. Heute dehnt sich dieser Bedarf auch auf dreidimensional verformte Platten aus anderen Materialien aus.

Die Technologie zur Verformung von Glasscheiben hat sich chronologisch entwickelt. Ursprünglich wurden Glasscheiben in sogenannten Vertikalverfahren verformt, wozu die zu verformenden Glasscheiben vertikal in Öfen erwärmt und dann in vertikaler Position mittels Klammern gehalten in eine Vertikalform gebracht. Um Sicherheitsglas zu erhalten, wurden die Oberflächen gekühlt.

Im Laufe der Zeit ist man dazu übergegangen, Glasscheiben in sogenannten Horizontalverfahren zu verformen, wozu zu verformende Platten aus Glas horziontal in einem Ofen liegend auf ihre Erweichungstemperatur gebracht werden. Die Erweichungstemperatur ist die Temperatur, bei welcher das Material, aus dem zu verformende Platte gefertigt ist, plastisch verformbar ist. In den Anfängen des Horizontalverfahrens wurden die horizontal erwärmten Platten z.B. mittels vakuumevakuierten Halteglocken hochgehoben und einer Form zugeführt, indem die Platte auf die Form mehr oder weniger fallengelassen wurde. Durch die Schwerkraft hat die Platte dann die gewünschte Verformung eingenommen. Um jedoch die Platte anschließend abkühlen zu können, wird als Form im wesentlichen ein Rahmen verwendet, so daß sich in der Rahmenmitte unerwünschte Deformationen der Platten ergeben haben.

Auch führt man die horizonal erwärmten Platten über Rollen einer Biegestation zu. Als Öfen werden bevorzugt sogenannte Rollenherdöfen eingesetzt, und die auf die Erweichungstemperatur erwärmten Platten werden dann über Rollen, insbesondere keramische Rollen, der Biegestation zugeführt beispielsweise gemäß US-A-4 139 359. Nach dem Verformen wird die Platte entweder direkt auf der Biegestation gekühlt oder einer Kühlstation zugeführt. In neueren Bauformen besteht die Biegestation im wesentlichen aus Formstäben, welche nebeneinander angeordnet rostartig eine Oberfläche bilden, die der gewünschten durch die Verformung zu erhaltenden Form entspricht. Nach einem bekannten Verfahren werden die horizontal erwärmten Glasplatten auf horizontalen Rollen aus dem Ofen heraustransportiert. Dann werden die horizontal angeordneten, waagerechten Rollen abgesenkt, und die Platte kommt auf den die Form bildenden Formstäben zu liegen. Durch Andruckrollen wird die Scheibe auf die Formstäbe gepreßt und erhält ihre gewünschte Form. Anschließend wird die geformte Scheibe einer Kühlstation zugeführt, welche im wesentlichen aus Luftdüsen besteht, durch die Kühlluft auf die Scheibenoberflächen geblasen wird.

Zur Durchführung dieser beschriebenen Verfahren ist es durchaus bekannt, die Stationen aneinander anzuschließen oder beispielsweise auch die Biege- und die Kühlstation in einer Vorrichtung zu integrieren, beispielsweise aus EP-A1-0 263 030.

Sämtliche vorbekannten Verfahren und Vorrichtungen arbeiten jedoch nach ein und demselben Grundsatz. Dieser Grundsatz besagt, daß zunächst die gesamte zu verformende Platte auf ihre Erwärmungstemperatur erwärmt wird, anschließend die gesamte Platte auf der Verformungsstation verformt und schließlich die gesamte Platte durch Kühlen vorgespannt wird. Es ist jedoch offensichtlich, daß sich bereits in der Zeit, in welcher die gesamte Platte aus dem Ofen auf die Biegestation verbracht wurde, Wärmeverluste ergeben. Da insbesondere bei Glasscheiben sowohl zum Verformen als auch zum Vorspannen in etwa die gleiche Plattentemperatur benötigt wird, wirken sich diese Wärmeverluste auf die Qualität der erhaltenen Platten erheblich aus. Weiterhin wirkt sich auf die Qualität der Platten nachteilig aus, daß beim Horizontalverfahren die Platten horizontal liegend über die genannten Keramikrollen aus dem Ofen heraus zur Biegestation verfahren werden. Somit verbleiben die in Vorschubrichtung hinteren Teile der Platte länger im Ofen als die vorderen, an denen sich wiederum schneller die Wärmeverluste auswirken. Dadurch hat die auf der Biegestation angekommende Platte bereits an verschiedenen Stellen unterschiedliche Temperaturen.

Es wurden bereits viele Maßnahmen versucht, um den sich durch die Wärmeverluste ergebenden Nachteilen entgegenzuwirken. Zum einen wurde die Platte auf eine Übertemperatur erhitzt. Da jedoch der Übertritt in den Bereich der plastischen Verformbarkeit sehr schnell stattfindet, ergibt sich bei einer zu großen Übertemperatur eine grundsätzliche Welligkeit der erhaltenen Platte, wenn sie aus dem Ofen heraus auf die im wesentlichen aus Rollen oder Formstäben bestehende Biegestation verbracht wird. Es genügen bereits geringe Temperaturunterschiede in der Größenordnung von 2°C bis 3°C, um diese Welligkeit zu bewirken. Das Ergebnis ist jedoch nicht befriedigend, wenn enge Toleranzen, beispielsweise im Bereich des Bauglases, gefordert sind. Auch andere Versuche, die Platten warm zu halten, nachzuwärmen oder dgl. haben sich als wirtschaftlich sehr aufwendig und im Ergebnis äußerst unbefriedigend erwiesen.

Ein weiteres Problem mit den herkömmlichen Verfahren und Vorrichtungen ergibt sich in der Beschränkung hinsichtlich der formbaren Radien. Aufgrund der unterschiedlichen Temperatur einer Glasplatte an ihrer Vorder- und Hinterkante nach dem Verfahren aus dem Wärmeofen zur Biegestation lassen sich mit vernünftigem wirtschaftlichem Aufwand keine gleichmäßigen Zylinder formen. Sollen sehr enge Radien geformt werden, so geht dies nur durch aufeinanderfolgende Verformung mit immer enger werdendem Radius. Aufgrund der beschriebenen Wärmeverluste ist dies nicht mit vertretbarem wirtschaftlichem Aufwand möglich. Nahezu unmöglich ist es, Kegelsegmente herzustellen, was zum einen an den unterschiedlichen Temperaturen an der gleichen Platte, zum anderen an den Wärmeverlusten liegt. Wenn insbesondere in der Architektur sehr enge Radien, sehr gleichförmige Zylinder oder Kegelsegmente, beispielsweise für die Dachgestaltung, gefordert sind, so werden die gewünschten Glasformen in aller Regel mit sehr großem wirtschaftlichem Aufwand in Einzelfertigung hergestellt.

Davon ausgehend liegt der vorliegenden Erfindung die **Aufgabe** zugrunde, ein Verfahren zum dreidimensionalen Verformen von Glasscheiben dahingehend weiterzuentwickeln, daß die beschriebenen Nachteile vermieden werden, insbesondere soll der erforderliche wirtschaftliche Aufwand zum Verformen erheblich verringert werden. Es sollen auch ohne großen Formenaufwand möglichst gleichförmige Zylinder und enge Radien bis hin zu Kegelsegmenten formbar sein. Weiterhin soll mit der vorliegenden Erfindung eine Vorrichtung zum Durchführung des erfindungsgemäßen Verfahrens angegeben werden.

Verfahrensseitig wird als **Lösung** der Aufgabe ein Verfahren zum dreidimensionalen Verformen von Glasscheiben mit den Merkmalen gemäß Patentanspruch 1 angegeben. Vorrichtungsseitig ergibt sich die Lösung durch eine Vorrichtung mit den Merkmalen gemäß Patentanspruch 18. Mit der Erfindung wird somit vorgeschlagen, daß die Verfahrensschritte des Erwärmens, des Verformens und des Vorspannens hintereinander auf einzelne aufeinanderfolgende Bearbeitungssegmente der zu verformenden Platte angewandt werden, so daß unterschiedliche Bearbeitungssegmente der Platte zur gleichen Zeit in einem anderen Verfahrensschritt bearbeitet werden.

Das erfindungsgemäße Verfahren bietet den Vorteil, daß die Verformung der Platten, insbesondere von Glasscheiben, in einem kontinuierlichen Ablauf durchgeführt werden kann. Die Platte wird nicht mehr insgesamt erwärmt, insgesamt verformt und in ihrer Gesamtheit vorgespannt, sondern nach Erreichen der gewünschten Erweichungstemperatur an ihrer in Transportrichtung vorne liegenden Kante zum Verformen aus dem Ofen verfahren, so daß die Vorderkante bereits verformt wird, während die dahinterliegenden Segmente der Platte noch in dem Ofen erwärmt werden. Wird die Platte weiter vorgefahren, werden die folgenden Bearbeitungssegmente verformt, während das vorderste Bearbeitungssegment bereits durch gezielte Kühlung vorgespannt wird. Dieses Verfahren wird kontinuierlich weitergeführt, bis die Hinterkante der zu verformenden Platte den Ofen mit Erweichungstemperatur verlassen hat, verformt und anschließend durch gezielte Kühlung vorgespannt wurde, während der vorderste Plattenbereich bereits fertig verformt ist.

Der besondere Vorteil des erfindungsgemäßen Verfahrens besteht darin, daß die zu verformende Platte an allen Stellen, an welchen sie verformt wird, jeweils die gleiche Temperatur aufweist. Somit ist es ohne weiteres möglich, völlig gleichförmige Zylinder zu formen. Darüber hinaus gibt es keine Verformungsunterschiede zwischen Plattenvorder- und Plattenhinterkante. Das Verfahren wird dadurch auch erheblich wirtschaftlicher, daß nurmehr sehr kurze Verformstrecken erforderlich sind, da immer nur ein kurzes Plattensegment direkt nach Verlassen des Ofens verformt werden muß.

Im Gegensatz zu dem gesamten vorbekannten Stand der Technik hat sich in überraschender Weise gezeigt, daß dieses partielle Bearbeiten der zu verformenden Platte ohne weiteres möglich ist, ohne die Qualität der endgültig verformten Gesamtplatte in irgendeiner Form zu benachteiligen.

Mit Vorteil wird angegeben, daß im ersten Verfahrensschritt die gesamte Platte gleichzeitig auf die Erweichungstemperatur erwärmt wird. Mit dieser Maßnahme können herkömmliche Erwärmungsvorrichtungen, beispielsweise Rollenherdöfen, verwendet werden. Darüber hinaus kann das erfindungsgemäße Verfahren mit dieser Maßnahme sehr schnell durchgeführt werden, da die insgesamt auf Erweichungstemperatur erwärmte Platte sehr schnell der partiellen Verformung und anschließenden partiellen Kühlung zugeführt werden kann.

Mit Vorteil wird weiterhin angegeben, daß bei der Verformung der Platten jedes zu bearbeitende Segment hintereinander mehrere Verformungsstufen durchläuft. Da alle Bearbeitungssegmente die jeweiligen Verformungsstufen mit der jeweils gleichen Temperatur erreichen, wird im Endergebnis eine gleichförmig verformte Platte erhalten. Auf diese Weise sind auch sehr enge Radien mit geringem wirtschaftlichem Aufwand möglich. Wird, wie weiterhin mit Vorteil vorgeschlagen, das Verfahren in einer vorgegebenen Vorschubposition der zu verformenden Platte abgebrochen und die Platte anschließend nurmehr der Kühlung zugeführt, lassen sich auch mit sehr geringem wirtschaftlichem Aufwand Formen erzielen, die Kegelsegmenten entsprechen. Während die Vorderkante bereits in einer zweiten oder dritten Verformungsstufe auf einen sehr engen Radius verformt wurde, kann die Hinterkante gerade den Ofen verlassen haben und noch nahezu eben sein. Mit dieser verfahrensmäßigen Ausgestaltung lassen sich fast beliebige Kegelsegmentformen erzielen.

Mit Vorteil wird angegeben, daß die Verformung im zweiten Schritt durch Biegen erfolgt. Dabei kann das Biegen durch eine vollständige Formunterstützung, und zwar durch Schwerkraft oder durch Formwalzen erfolgen. Gemäß einer vorteilhaften Ausgestaltungsform der Erfindung kann das Verfahren so durchgeführt werden, daß die Biegelinie parallel zur Transportrichtung liegt. Die aus dem Erwärmungsofen vorgeschobene Platte läuft dabei beispielsweise über quer zur Transportrichtung liegende, einen Radius aufweisende Formwalzen. Wenn die seitlichen Plattenränder in einer bestimmten Position gegen einen Anschlag stoßen und auf diese Weise gedrückt werden, lassen sich gleichmäßige, zylindrische Verformungen erzielen.

Mit Vorteil wird auch angegeben, daß das Verfahren so durchgeführt wird, daß die Biegelinie quer zur Transportrichtung verläuft. Beispielsweise lassen sich durch horizontal liegende Walzenanordnungen die aus dem Ofen vorgeschobenen Platten quer zur Transportrichtung nach oben oder unten verbiegen. Dadurch sind sehr enge Radien möglich und darüber hinaus eine sehr kurze vorrichtungsseitige Gesamtanordnung.

In vorteilhafter Weise wird angegeben, daß die Kühlung durch Luft erfolgt, welche in vorteilhafter Weise auf die Oberfläche der verformten Platte geblasen wird. Mit besonderem Vorteil wird angegeben, daß die Luft am Eintritt in den Verformbereich gehindert wird. Dadurch wird vermieden, daß das aus dem Ofen vorgeschobene, auf Erweichungstemperatur erwärmte Bearbeitungssegment, welches im Verformbereich liegt, bereits durch unerwünscht geleitete Kühlluft vorgekühlt wird.

Schließlich wird verfahrensseitig mit Vorteil angegeben, daß die Abkühlung mehrstufig in hintereinanderliegenden Stationen erfolgt.

Es ist offensichtlich, daß mit dem erfindungsgemäßen Verfahren nahezu jede beliebige Form, ob rund oder eckig, hergestellt werden kann, wobei mit geringem wirtschaftlichem Aufwand sehr einheitlich verformte und nahezu fehlerfreie Platten erzielbar sind. Die Gesamtanlage bedarf nur einer sehr kurzen Strecke, insbesondere einer sehr kurzen Biegestrecke, und praktisch keiner weiteren Formen. Die Scheibe hat an allen Biegeorten die gleiche Temperatur und kann sehr viel detaillierter in ihren Segmenten verformt werden. Auch lassen sich ohne weiteres uneinheitliche Verformungen erzielen. Dabei spielt es keine Rolle, ob die zu verformende Platte mittelliniensymmetrisch ist oder nicht. Beispielsweise lassen sich mit dem erfindungsgemäßen Verfahren völlig problemlos auch Platten mit schrägen Kanten gleichmäßig verformen, ohne daß es infolge ungleichmäßiger Schwerkrafteinwirkung oder ungleichmäßig wirkender Andruckkräfte zu Unregelmäßigkeiten kommt.

Vorrichtungsseitig wird zur **Lösung** der obengenannten Aufgabe eine Vorrichtung zum dreidimensionalen Verformen von Platten, insbesondere Glasscheiben, nach dem erfindungsgemäßen Verfahren angegeben, bei welcher ein Ofen, eine Biegestation, eine Kühlstation und eine Transportvorrichtung derart zueinander angeordnet sind, daß der Ofen, die Biegestation und die Kühlstation in dieser Reihenfolge aneinander anschließend direkt hintereinander aufgestellt eine Transportbahn bilden, entlang derer die zu verformende Platte mit der Transportvorrichtung kontinuierlich vorgeschoben wird.

In vorteilhafter Weise hat der Ofen eine Einschuböffnung für die Platte an der der Biegestation entgegengesetzten Seite. Darüber hinaus wird mit Vorteil angegeben, daß der Ofen einen Innenraum aufweist, der zur Aufnahme einer gesamten zu verformenden Platte geeignet ist.

Im Bereich der Kühlstation werden vorteilhafterweise Luftdüsen verwendet, welche mit Vorteil wenigstens über die Breite der Platte angeordnet sind. Dabei ist es gut, wenn viele Düsen nebeneinander angeordnet sind, insbesondere, wenn diese Düsen auf die Form der verformten Bearbeitungssegmente einrichtbar sind.

Erfindungsgemäß ist die Biegestation kürzer als die zu verformende Platte in Transportrichtung gesehen und umfaßt mit Vorteil wenigstens eine Formschale.

In vorteilhafter Weise handelt es sich bei der Formschale um einen Formstab, welcher einen verstellbaren Kern und einen darum umlaufenden beweglichen Teil aufweist. Zur gewünschten Verformung der Platte können Andruckrollen oder eine mit dem Formstab oder der Formschale zusammenwirkende darüberliegende Formrolle angeordnet sein. Mit besonderem Vorteil wird angegeben, daß die obenliegende Formrolle denselben Radius hat wie die untenliegende. Dadurch wird gewährleistet, daß die obenliegende Formrolle wie eine aerodynamische Dichtung von in Transportrichtung vorne gesehen ankommende Kühlluft am Eintritt in den Formbereich hindert.

Mit Vorteil wird weiterhin angegeben, daß die Formwalzen im wesentlichen gerade sind und horizontal quer vor der Ofenaustrittsöffnung liegen, so daß die Platte mit einer Biegelinie quer zur Transportrichtung gebogen wird.

Die erfindungsgemäße Vorrichtung kann gegenüber herkömmlichen Vorrichtungen, obwohl sie im wesentlichen gleiche oder ähnliche Einzelelemente umfaßt, sehr viel wirtschaftlicher gestaltet werden, da sämtliche Stationen nur noch die Größe eines Bearbeitungssegmentes haben müssen. Insbesondere brauchen die Biege- und die Kühlstation nur noch sehr kurz zu sein, im Idealfall eine einstufige Bearbeitungslinie aufweisen, da die zu verformende Platte durch diese Bereiche hindurchgeführt wird.

Während im Stand der Technik die Entwicklung immer nur eine Richtung ging, die die bei den herkömmlichen Verfahren auftretenden Wärmeverluste und Temperaturunterschiede zu kompensieren versuchte, wurde es für nahezu unmöglich erachtet, diese partielle Segmentbearbeitung vorzunehmen. Es hat sich überraschend herausgestellt, daß neben den wirtschaftlichen Vorteilen auch die Gleichförmigkeit und die Qualität der verformten Platten insgesamt erheblich verbessert werden konnte.

Weitere Vorteile und Merkmale der Erfindung ergeben sich aus der folgenden Beschreibung anhand der Figuren. Dabei zeigen:
- Fig. 1: eine schematische Seitenansicht einer erfindungsgemäßen Vorrichtung;
- Fig. 2: eine schematische Seitenansicht einer erfindungsgemäßen Vorrichtung gemäß einer weiteren Ausführungsform;
- Fig. 3: eine schematische Schnittansicht entlang der Linie III-III gemäß Fig. 1;
- Fig. 4: eine schematische Ansicht entlang der Linie IV-IV gemäß Fig. 1; und
- Fig. 5: eine schematische Teilansicht entlang der Linie V-V gemäß Fig. 1

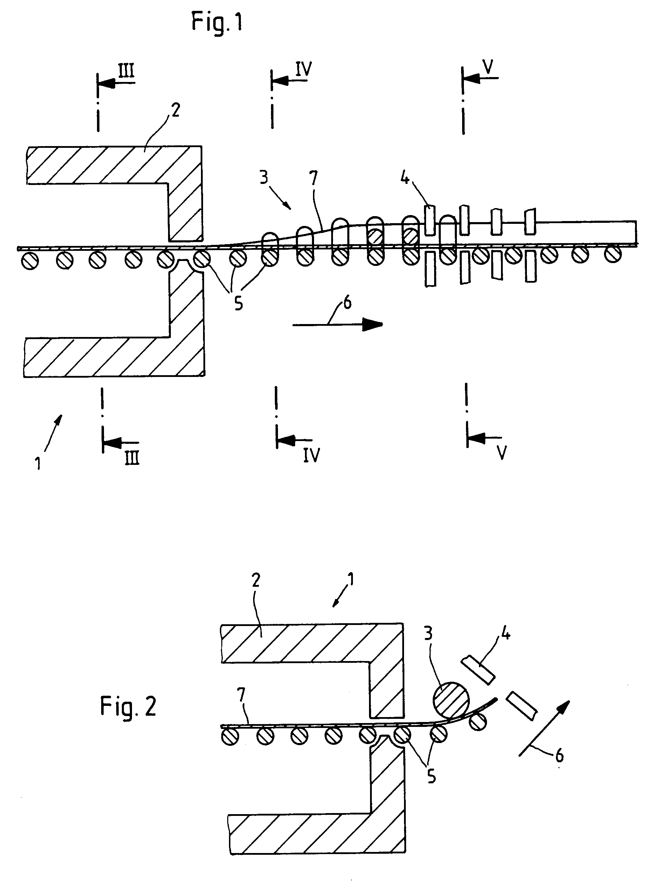

Fig. 1 zeigt schematisch in Seitenansicht eine erfindungsgemäße Verformungsvorrichtung 1, welche aus einem Ofen 2, einer Biegestation 3 und einer Kühlstation 4 besteht. In der gezeigten Ausführungsform wird eine zu verformende Platte 7 in der Transportrichtung 6 kontinuierlich vorgeschoben. Sie muß hierbei bis zum Ende der Erwärmung kontinuierlich in Bewegung sein. Die Platte 7 wird auf Rollen 5 horizontal aufgelegt und zunächst im Ofen 2 auf Erweichungstemperatur, beispielsweise im Bereich von 630°C, erwärmt. Dabei kann die ganze Platte 7 im Ofen 2 liegen oder nur mit dem jeweiligen Bearbeitungssegment. Nach Erreichen der Erweichungstemperatur der Platte oder des Segmentes wird die Platte kontinuierlich vorgefahren, wodurch das nächste Segment im Ofen erwärmt wird, während gleichzeitig das bereits erwärmte Segment in der Biegestation 3 verformt wird. Im gezeigten Ausführungsbeispiel umfaßt die Biegestation 3 mehrere hintereinanderliegende Stufen, so daß die Segmente der vorgeschobenen Platte 7 in den endgültig gewünschten Radius gebogen werden, während dahinterliegende Segmente noch in den Ofen auf Erweichungstemperatur erwärmt werden. Nach dem Verlassen der letzten Verformungsstufe erreicht das endgültig verformte Plattensegment die Kühlstation 4, wo beispielsweise auf die Plattenoberflächen Kühlluft aufgeblasen wird. Es ist offensichtlich, daß mit der nach dem erfindungsgemäßen Verfahren arbeitenden erfindungsgemäßen Vorrichtung nahezu endlose verformte Platten herstellbar sind.

Bei dem in Fig. 2 gezeigten Ausführungsbeispiel für eine Verformungsvorrichtung 1 wird die zu verformende Platte 7 ebenfalls in dem Ofen 2 auf Erweichungstemperatur erwärmt, und über Rollen 5 mit einer nicht gezeigten Transportvorrichtung in Transportrichtung 6 der Biegestation zugeführt. Die Biegestation 3 besteht aus einer horizontalen Walzenanordnung, so daß die vorgeschobene Platte 7 um eine quer zur Transportrichtung 6 liegende Biegelinie verformt wird. Entsprechend dem zu erwartenden Vorschub der verformten Platte 7 wird die Kühlstation 4 nach der Biegestation 3 angeordnet, beispielsweise um Kühlluft auf die Oberflächen der Platte 7 zu blasen.

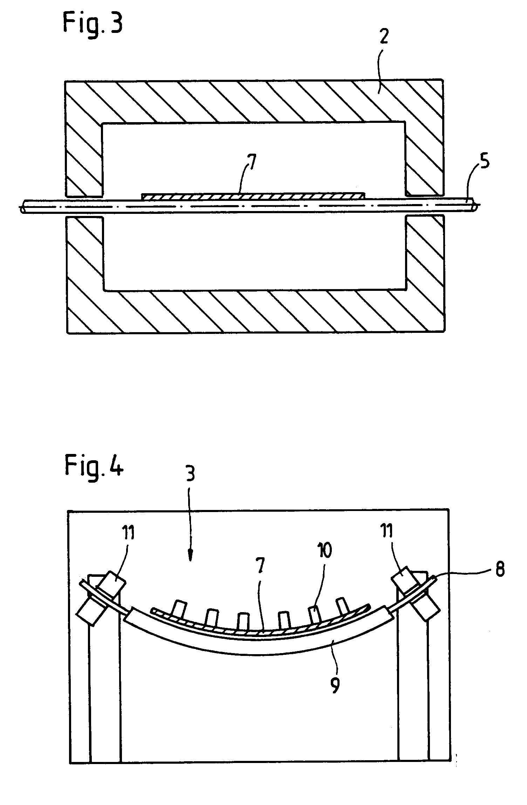

Bei dem Ofen 2 kann es sich, wie in Fig. 3 beispielsweise gezeigt, um einen sogenannten Rollenherdofen handeln, bei welchem die zu verformende Platte 7 über Rollen 5 liegend erwärmt wird.

Nach Erreichen der Erweichungstemperatur wird die Platte 7 über Rollen vorgeschoben, und verläßt mit einem Segment den Ofen. Wie in Fig. 4 gezeigt, kann das Segment in der Biegestation 3 auf einem Formstab 8 verformt werden. Derartige Formstäbe sind aus dem Stand der Technik bekannt. Beispielsweise handelt es sich um Rundstäbe aus Federstahl, flexible Hohlstäbe, auch aus Kunststoff, Federblätter oder dgl., welche in gezeigter Weise in einem Radius verspannt werden können. Um den Formstab 8 herum ist ein beweglicher Teil 9, beispielsweise eine schlauchförmige Rolle, angeordnet. Die Rolle ist angetrieben und fördert die Platte weiter. Um die Platte 7 in die gewünschte Form zu bringen, können oberhalb des Formstabes 8 Andruckrollen 10 angeordnet sein. Alternativ kann auch eine an der oberen Oberfläche liegende Formrolle angeordnet sein, beispielsweise ebenfalls in Form eines Formstabes mit beweglichem Teil. Die Formstäbe können über eine Verstellvorrichtung 11 verstellt werden. Alternativ zu dem im Stand der Technik bekannten Vorrichtungen kann die Verstellung durch entsprechende drehbare Einspannelemente, durch Verfahren der Formstabenden, beispielsweise mit Kettenantrieb, durch hydraulisches Verbiegen mittels Hydraulikzylindern und dgl. erfolgen.

Die Verwendung einer an der oberen Oberfläche liegenden Andruckwalze hat den Vorteil, daß diese als aerodynamische Dichtung gegen die in Vorschubrichtung von vorne kommende Kühlluft dienen kann. Zu diesem Zweck ist es von Vorteil, wenn die Rolle in einem geringfügig kleineren Radius gebogen ist.

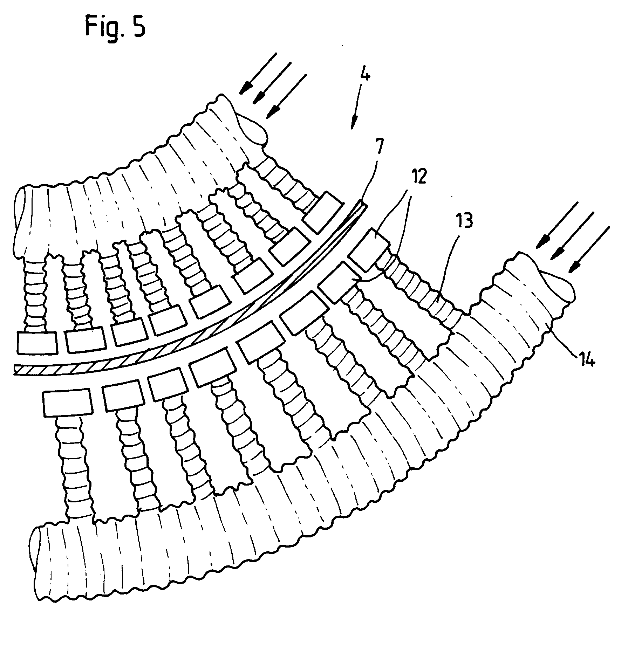

Fig. 5 zeigt schließlich ein Ausführungsbeispiel für eine Kühlstation 4, bei welcher Kühlluft über Düsen 12 auf die Oberflächen der verformten Platten aufgeblasen wird. Im Falle der Verformung von Glasscheiben lassen sich mit dieser Methode Sicherheitsgläser erzeugen, deren Oberflächen aufgrund der rapiden Kühlung gegenüber dem Plattenkern unter einer Vorspannung stehen. Bei Beschädigung bilden sich in bekannter Weise die kleinen Bruchsegmente aus. Die Düsen 12 können in vorteilhafter Weise ebenfalls verstellbar sein, so daß sie in ihrer Anordnung der Form der verformten Platte 7, welche durch die Linie von Luftdüsen 12 hindurch vorgeschoben wird, angepaßt werden können. Die Düsen 12 sind über Anschlußleitungen 13 mit einem Luftkanal 14 verbunden, durch welchen die Kühlluft über die Anschlußleitungen zu den Düsen in gewünschter Temperatur und in gewünschtem Druck zugeführt wird. Selbstverständlich gibt es viele Alternativen für die Verstellung und Anpassung der Luftdüsen, welche beispielsweise auch in Form eines einzigen der Plattenform entsprechenden Luftschlitzes ausgebildet sein können.

Die Erfindung ist nicht durch Ausgestaltungsdetails der einzelnen Stationen beschränkt, sofern das erfindungsgemäße Prinzip, das kontinuierliche Vorschieben der zu verformenden Platte und das gleichzeitige Bearbeiten unterschiedlicher Bearbeitungssegmente in unterschiedlichen Bearbeitungsstationen realisiert ist.

## Patentansprüche

1. Verfahren zum dreidimensionalen Verformen von Glasscheiben, welche
a) im ersten Schritt auf die Erweichungstemperatur erwärmt,
b) im zweiten Schritt verformt, und
c) im dritten Schritt durch gezielte Kühlung vorgespannt werden,
wobei die Verfahrensschritte hintereinander auf einzelne aufeinanderfolgende Bearbeitungssegmente der zu verformenden Platte derart angewandt werden, daß unterschiedliche nachfolgende Bearbeitungssegmente der Platte zur gleichen Zeit in einem anderen Verfahrensschritt wirksam bearbeitet werden, wobei nachfolgende Bearbeitungssegmente beispielsweise noch auf Verarbeitungstemperatur erwärmt werden, während vorlaufende Bearbeitungssegmente beispielsweise schon verformt werden.

2. Verfahren nach Anspruch 1, dadurch gekennzeichnet, daß die Platte in einer Richtung durch die Bearbeitungsstationen kontinuierlich transportiert wird.

3. Verfahren nach einem der vorhergehenden Ansprüche, dadurch gekennzeichnet, daß im ersten Schritt die gesamte Platte gleichzeitig auf die Erweichungstemperatur erwärmt wird.

4. Verfahren nach einem der vorhergehenden Ansprüche, dadurch gekennzeichnet, daß im zweiten Schritt jedes Bearbeitungssegment mehrere Verformungsstufen hintereinander durchläuft.

5. Verfahren nach einem der vorhergehenden Ansprüche, dadurch gekennzeichnet, daß es in einer vorgegebenen Vorschubposition der zu verformenden Platte abgebrochen wird.

6. Verfahren nach einem der vorhergehenden Ansprüche, dadurch gekennzeichnet, daß die zu verformende Platte im zweiten Schritt durch Biegen verformt wird.

7. Verfahren nach Anspruch 6, dadurch gekennzeichnet, daß die zu verformende Platte beim Biegen an den Rändern unterstützt wird.

8. Verfahren nach Anspruch 6, dadurch gekennzeichnet, daß die zu verformende Platte beim Biegen vollständig formunterstützt ist.

9. Verfahren nach einem der Ansprüche 6 bis 8, dadurch gekennzeichnet, daß das Biegen durch Schwerkraftunterstützung erfolgt.

10. Verfahren nach einem der Ansprüche 6 bis 9, dadurch gekennzeichnet, daß das Biegen durch Formwalzen erfolgt.

11. Verfahren nach einem der Ansprüche 6 bis 10, dadurch gekennzeichnet, daß die Biegenlinie parallel zur Transportrichtung der zu verformenden Platte verläuft.

12. Verfahren nach Anspruch 11, dadurch gekennzeichnet, daß die Ränder der vorgeschobenen zu verformenden Platte in ihrer Bewegung nach oben durch einen Anschlag behindert werden.

13. Verfahren nach einem der Ansprüche 6 bis 10, dadurch gekennzeichnet, daß die Biegelinie quer zur Transportrichtung der zu verformenden Platte verläuft.

14. Verfahren nach einem der vorhergehenden Ansprüche, dadurch gekennzeichnet, daß im dritten Schritt durch Kühlluft gekühlt wird.

15. Verfahren nach Anspruch 14, dadurch gekennzeichnet, daß die Kühlluft auf die Oberflächen der verformten Platte aufgehlasen wird.

16. Verfahren nach einem der Ansprüche 14 oder 15, dadurch gekennzeichnet, daß die Kühlluft am Eintritt in den Verformbereich gehindert wird.

17. Verfahren nach einem der vorhergehenden Ansprüche, dadurch gekennzeichnet, daß im dritten Schritt in mehreren, hintereinanderliegenden Stufen gekühlt wird.

18. Vorrichtung zum dreidimensionalen Verformen von Glasscheiben (7) nach dem Verfahren nach wenigstens einem der Ansprüche 1 bis 17, mit einem Ofen (2), einer Biegestation (3), einer Kühlstation (4) und einer Transportvorrichtung, wobei der Ofen (2), die Biegestation (3) und die Kühlstation (4) in dieser Reihenfolge aneinander anschließend direkt hintereinander angeordnet eine Transportbahn bilden, entlang derer die zu verformende Platte (7) mit der Transportvorrichtung kontinuierlich vorgeschoben wird, wobei Transportgeschwindigkeit und Dimensionen derart aufeinander abgestimmt sind, daß unterschiedliche nachfolgende Bearbeitungssegmente der glasscheibe zur gleichen Zeit in Verschiedenen oben genannten Bearbeitungsstationen wirksam bearbeit werden.

19. Vorrichtung nach Anspruch 18, dadurch gekennzeichnet, daß der Ofen (2) eine Einschuböffnung für die Platte (7) an der der Biegestation (3) entgegengesetzten Seite aufweist.

20. Vorrichtung nach einem der Ansprüche 18 oder 19, dadurch gekennzeichnet, daß der Ofen (2) einen Innenraum zur Aufnahme einer ganzen zu verformenden Platte (7) aufweist.

21. Vorrichtung nach einem der Ansprüche 18 bis 20, dadurch gekennzeichnet, daß die Kühlstation (4) Luftdüsen (12) aufweist.

22. Vorrichtung nach Anspruch 21, dadurch gekennzeichnet, daß die Luftdüsen (12) wenigstens über die Breite der verformten Platte (7) angeordnet sind.

23. Vorrichtung nach einem der Ansprüche 21 oder 22, dadurch gekennzeichnet, daß über die Breite der Platte (7) eine Vielzahl von Luftdüsen (12) nebeneinander angeordnet sind.

24. Vorrichtung nach Anspruch 23, dadurch gekennzeichnet, daß die Düsen (12) auf die Form der verformten Platte (7) einrichtbar sind.

25. Vorrichtung nach einem der Ansprüche 18 bis 24, dadurch gekennzeichnet, daß die Biegestation (3) kürzer ist als die Platte (7) in Transportrichtung gesehen.

26. Vorrichtung nach einem der Ansprüche 18 bis 25, dadurch gekennzeichnet, daß die Biegestation (3) wenigstens eine Formschale aufweist.

27. Vorrichtung nach einem der Ansprüche 18 bis 26, dadurch gekennzeichnet, daß die Biegestation (3) einen Formstab (8) aufweist.

28. Vorrichtung nach Anspruch 27, dadurch gekennzeichnet, daß der Formstab (8) einen verstellbaren Kern zum Einstellen unterschiedlicher Biegeradien aufweist.

29. Vorrichtung nach einem der Ansprüche 18 bis 28, dadurch gekennzeichnet, daß die zu verformende Platte mit Andruckrollen (10) auf die Formvorrichtung drückbar ist.

30. Vorrichtung nach einem der Ansprüche 18 bis 29, dadurch gekennzeichnet, daß die Biegestation (3) ein Formwalzenpaar umfaßt.

31. Vorrichtung nach Anspruch 30, dadurch gekennzeichnet, daß die obenliegende Walze denselben Radius wie die untenliegende Walze hat.

32. Vorrichtung nach einem der Ansprüche 18 bis 31, dadurch gekennzeichnet, daß die Biegestation (3) im wesentlichen horizontal liegende und gerade Formwalzen zum Biegen mit einer Biegelinie quer zur Transportrichtung aufweist.

## Claims

1. Method for the three-dimensional shaping of glass panes, which
a) in the first step are heated to the softening point,
b) in the second step are shaped, and
c) in the third step are tempered by controlled cooling,
the method steps being successively applied to individual, successive treatment segments of the plate which is to be shaped, in such a manner that different, subsequent treatment segments of the plate are simultaneously being actively treated in a different method step, in which case later treatment segments, for example, are still being heated to the working temperature while earlier treatment segments, for example, are already being shaped.

2. Method according to Claim 1, characterized in that the plate is conveyed continuously in one direction through the treatment stations.

3. Method according to one of the preceding Claims, characterized in that, in the first step, the entire plate is simultaneously heated to the softening point.

4. Method according to one of the preceding Claims, characterized in that, in the second step, each treatment segment passes through a plurality of shaping stages one after the other.

5. Method according to one of the preceding Claims, characterized in that it is interrupted in a predetermined feed position of the plate which is to be shaped.

6. Method according to one of the preceding Claims, characterized in that the plate which is to be shaped is shaped by bending in the second step.

7. Method according to Claim 6, characterized in that the plate which is to be shaped is supported at the edges when it is being bent.

8. Method according to Claim 6, characterized in that the plate which is to be shaped is completely dimensionally supported when it is being bent.

9. Method according to one of Claims 6 to 8, characterized in that the bending takes place by means of gravity assist.

10. Method according to one of Claims 6 to 9, characterized in that the bending is carried out by means of shaping rollers.

11. Method according to one of Claims 6 to 10, characterized in that the bend line runs parallel to the direction in which the plate which is to be shaped is conveyed.

12. Method according to Claim 11, characterized in that the edges of the advancing plate which is to be shaped are impeded in their upwards movement by a stop.

13. Method according to one of Claims 6 to 10, characterized in that the bend line runs transversely to the direction in which the plate which is to be shaped is conveyed.

14. Method according to one of the preceding Claims, characterized in that, in the third step, cooling is carried out by means of cooling air.

15. Method according to Claim 14, characterized in that the cooling air is blown onto the surfaces of the shaped plate.

16. Method according to one of Claims 14 or 15, characterized in that the cooling air is prevented from entering the shaping region.

17. Method according to one of the preceding Claims, characterized in that, in the third step, cooling is carried out in a plurality of successive stages.

18. Device for the three-dimensional shaping of glass panes (7) using the method according to at least one of Claims 1 to 17, having a furnace (2), a bending station (3), a cooling station (4) and a conveyer device, the furnace (2), the bending station (3) and the cooling station (4), which, arranged immediately in succession in this order, forming a conveyor path along which the plate (7) which is to be shaped is advanced continuously using the conveyor device, conveying speed and dimensions being adapted to one another in such a manner that different, subsequent treatment segments of the glass pane are simultaneously being actively treated in various of the abovementioned treatment stations.

19. Device according to Claim 18, characterized in that the furnace (2) has a feed opening for the plate (7) on the side which lies opposite to the bending station (3).

20. Device according to one of Claims 18 or 19, characterized in that the furnace (2) has an inner chamber for accommodating an entire plate (7) which is to be shaped.

21. Device according to one of Claims 18 to 20, characterized in that the cooling station (4) has air nozzles (12).

22. Device according to Claim 21, characterized in that the air nozzles (12) are arranged at least over the width of the shaped plate (7).

23. Device according to one of Claims 21 or 22, characterized in that a multiplicity of air nozzles (12) are arranged next to one another across the width of the plate (7).

24. Device according to Claim 23, characterized in that the nozzles (12) can be set so as to correspond to the shape of the shaped plate (7).

25. Device according to one of Claims 18 to 24, characterized in that the bending station (3) is shorter than the plate (7), as seen in the direction in which the plate is conveyed.

26. Device according to one of Claims 18 to 25, characterized in that the bending station (3) has at least one shaping shell.

27. Device according to one of Claims 18 to 26, characterized in that the bending station (3) has a shaping rod (8).

28. Device according to Claim 27, characterized in that the shaping rod (8) has an adjustable core for setting different bending radii.

29. Device according to one of Claims 18 to 28, characterized in that the plate which is to be shaped can be pressed onto the shaping device by means of pressure rolls (10).

30. Device according to one of Claims 18 to 29, characterized in that the bending station (3) comprises a pair of shaping rollers.

31. Device according to Claim 30, characterized in that the top roller has the same radius as the bottom roller.

32. Device according to one of Claims 18 to 31, characterized in that the bending station (3) has essentially horizontal and straight shaping rollers for bending with a bending line which runs transversely to the direction in which the plate is conveyed.

## Revendications

1. Procédé de formage tridimensionnel de feuilles en verre, qui
a) dans une première étape sont chauffées à la température de ramollissement,
b) dans une deuxième étape sont soumises à un processus de formage, et
c) dans une troisième étape sont précontraintes par un refroidissement opéré à dessein,
les étapes de procédé étant appliquées les unes après les autres sur des segments opératoires successifs individuels de la plaque à déformer de manière que des segments opératoires successifs différents de la plaque soient travaillés efficacement en même temps dans une autre étape du procédé, des segments opératoires suivants étant, par exemple encore chauffés à la température de traitement pendant que des segments opératoires antérieurs ont par exemple déjà subi une déformation.

2. Procédé selon la revendication 1, caractérisé en ce que la plaque est transportée de façon continue dans une direction, à travers les postes opératoires.

3. Procédé selon l'une des revendications précédentes, caractérisé en ce que, dans la première étape, l'ensemble de la plaque est simultanément chauffé à la température de ramollissement.

4. Procédé selon l'une des revendications précédentes, caractérisé en ce que dans une deuxième étape chaque segment opératoire traverse, les unes après les autres, plusieurs étapes de déformation.

5. Procédé selon l'une des revendications précédentes, caractérisé en ce que dans une position d'avancement prédéterminée de la plaque on procède à une interruption du processus.

6. Procédé selon l'une des revendications précédentes, caractérisé en ce que la plaque formée est soumise à une déformation par pliage opérée au cours d'une deuxième étape.

7. Procédé selon la revendication 6, caractérisé en ce que la plaque à former est soutenue sur les bords pendant l'opération de pliage.

8. Procédé selon la revendication 6, caractérisé en ce que la plaque à former est soutenue sur la totalité de sa forme pendant la durée du processus de pliage.

9. Procédé selon l'une des revendications 6 à 8, caractérisé en ce que le pliage est effectué avec l'assistance de la force de gravité.

10. Procédé selon l'une des revendications 6 à 9, caractérisé en ce que le pliage est effectué par utilisation de rouleaux de formage.

11. Procédé selon l'une des revendications 6 à 10, caractérisé en ce que la ligne de pliage s'étend parallèlement à la direction de transport de la plaque à former.

12. Procédé selon la revendication 11, caractérisé en ce que les bords de la plaque avancée, devant être déformée sont bloqués pour empêcher tout déplacement vers le haut, par utilisation d'une butée.

13. Procédé selon l'une des revendications 6 à 10, caractérisé en ce que la ligne de pliage s'étend transversalement par rapport à la direction de transport de la plaque à former.

14. Procédé selon l'une des revendications précédentes, caractérisé en ce qu'un refroidissement est effectué à la troisième étape, par utilisation d'air de refroidissement.

15. Procédé selon la revendication 14, caractérisé en ce que l'air de refroidissement est soufflé sur les surfaces de la plaque formée.

16. Procédé selon l'une des revendications 14 ou 15, caractérisé en ce que toute entrée d'air de refroidissement dans la zone de formage est empêchée.

17. Procédé selon l'une des revendications précédentes, caractérisé en ce que dans la troisième étape un refroidissement est effectué en plusieurs étapes se suivant.

18. Dispositif de formage tridimensionnel de feuille en verre (7) selon le procédé selon au moins l'une des revendications 1 à 17, avec un four (2), un poste de pliage (3), un poste de refroidissement (4) et un dispositif de transport, le four (2), le poste de pliage (3) et le poste de refroidissement (4) étant disposés directement les uns derrière les autres en se faisant suite dans cet ordre de succession, en constituant une piste de transport, le long de laquelle la plaque à déformer (7) est avancée de façon continue à l'aide du dispositif de transport, la vitesse de transport et les dimensions étant choisies mutuellement de manière à pouvoir travailler efficacement des segments opératoires successifs différents de la feuille en verre, au même moment, dans différents postes opératoires cités ci-dessus.

19. Dispositif selon la revendication 18, caractérisé en ce que le four (2) présente une ouverture d'insertion destinée à la plaque (7), sur le côté opposé au poste de pliage (3).

20. Dispositif selon l'une des revendications 18 ou 19, caractérisé en ce que le four (2) présente un espace intérieur destiné à recevoir en totalité une plaque (7) à déformer.

21. Dispositif selon l'une des revendications 18 ou 20, caractérisé en ce que le poste de refroidissement (4) présente des buses à air (12).

22. Dispositif selon la revendication 21, caractérisé en ce que les buses à air (12) sont disposées au moins sur la largeur de la plaque (7) déformée.

23. Dispositif selon l'une des revendications 21 ou 22, caractérisé en ce qu'une pluralité de buses à air (12) sont disposées les unes à côté des autres sur la largeur de la plaque (7).

24. Dispositif selon la revendication 23, caractérisé en ce que les buses (12) sont susceptibles d'être ajustées à la forme de la plaque (7) formée.

25. Dispositif selon l'une des revendications 18 à 24, caractérisé en ce que le poste de pliage (3) est plus court que la plaque (7) si l'on observe dans la direction de transport.

26. Dispositif selon l'une des revendications 18 à 25, caractérisé en ce que le poste de pliage (3) présente au moins une coquille de moulage.

27. Dispositif selon l'une des revendications 18 à 26, caractérisé en ce que le poste de pliage (3) présente une barre de formage (8).

28. Dispositif selon la revendication 27, caractérisé en ce que la barre de formage (8) présente un noyau réglable permettant de régler des rayons de courbure différents.

29. Dispositif selon l'une des revendications 18 à 28, caractérisé en ce que la plaque à former est susceptible d'être pressée sur le dispositif de moulage, à l'aide de galets de pressage (10).

30. Dispositif selon l'une des revendications 18 à 29, caractérisé en ce que le poste de pliage (3) comprend une paire de rouleaux de formage.

31. Dispositif selon la revendication 30, caractérisé en ce que le rouleau placé en position supérieure présente le même rayon que le rouleau placé en position inférieure.

32. Dispositif selon l'une des revendications 18 à 31, caractérisé en ce que le poste de pliage (3) présente des rouleaux de formage sensiblement horizontaux et rectilignes, pour assurer le pliage avec une ligne de pliage orientée transversalement par rapport à la direction de transport.
